# FASCICULE DE BREVET EUROPEEN

(11) **EP 2 816 668 B1**
(45) Date de publication et mention de la délivrance du brevet: **12.06.2019**
(21) Numéro de dépôt: 14172568.9
(22) Date de dépôt: 16.06.2014
(51) Int. Cl.: H01Q 15/14, H01Q 1/12, G06T 7/00, B64G 1/00, G05B 19/404, G02B 23/00

(54) **Procédé de compensation de la gravité sur un instrument**
Verfahren zur Kompensation der auf ein Instrument einwirkenden Schwerkraft
Method for gravity compensation on an instrument

(30) Priorité: 21.06.2013 FR 1301452
(43) Date de publication de la demande: 24.12.2014
(73) Titulaire: Thales, 92400 Courbevoie (FR)
(72) Inventeur: Porte-Cazaux, Laurent, 06150 Cannes-La-Bocca (FR); Rancurel, Michaël, 06150 Cannes-La-Bocca (FR); Lasic, Thierry, 06150 Cannes-La-Bocca (FR)
(74) Mandataire: Esselin, Sophie

(56) Documents cités:
- DE-A1- 19 721 394
- RU-C1- 2 020 403
- US-A- 5 341 147
- US-A1- 2004 021 098

## Description

La présente invention concerne un procédé de compensation de la gravité sur un instrument. Elle s'applique à tout type d'instrument destiné à fonctionner en orbite terrestre, en absence de gravité, et en particulier lors du réglage au sol de tout type d'instrument de haute précision. L'instrument peut être par exemple un instrument de haute précision tel qu'un télescope spatial ou un interféromètre spatial ou une antenne et peut être destiné à être monté sur un satellite d'observation.

Un instrument de haute précision destiné à être monté sur un satellite et à fonctionner en orbite terrestre est classiquement réglé au sol, sur Terre, avant le lancement en orbite. Le problème est que lorsque l'instrument est au sol, il est soumis à l'effet de la gravité terrestre alors que lorsqu'il est en vol sur une orbite autour de la Terre, l'effet de la gravité disparaît. La différence de gravité entre la position à la surface de la Terre et la position en vol en orbite entraîne des déformations dans les pièces structurales de l'instrument. Pour obtenir une qualité de fonctionnement optimale après la mise en orbite de l'instrument, le réglage de l'instrument étant réalisé à la surface de la Terre, il est indispensable de tenir compte de l'effet dû à la gravité et de régler l'instrument dans un état correspondant à son fonctionnement en orbite, c'est-à-dire en absence de pesanteur.

Il est connu de compenser les déformations d'un instrument en plaçant des contrepoids à différents endroits de l'instrument. Par exemple, dans le cas du réglage d'un télescope comportant des miroirs de grand diamètre, tel que le VLT par exemple qui comporte des miroirs primaires de diamètre supérieur à 8 mètres, il est connu de compenser les déformations d'un miroir dues à la gravité en plaçant des vérins axiaux sous la surface du miroir. Les vérins appliquent des forces qui modifient la répartition des masses qui s'appliquent au miroir et permettent d'annuler les déformations locales du miroir afin qu'il conserve une forme optimale. Cependant les vérins sont utilisés en liaison avec des capteurs pour réaliser une compensation active en temps réel des déformations locales du miroir d'un télescope terrestre mais ne permettent pas de compenser les effets de la gravité sur un instrument complet destiné à fonctionner en absence de gravité. Le document RU 2020403 C1 décrit un contrôle du profil d'une pièce en l'absence de gravité par application de forces en différents points de la pièce. Le document US 5341147 A décrit une méthode de mesure de correction de l'alignement du faisceau d'une antenne en présence de gravité dans laquelle les mesures sont réalisées par une machine Zeiss ou un dispositif laser. Le document DE 197 21 394 A1 décrit la réalisation de mesures par photogrammétrie.

Il existe des solutions permettant de limiter la gravité d'un dispositif spatial, notamment un réflecteur d'antenne, en utilisant des moyens de suspension tels que des ballons d'hélium placés sous la surface du réflecteur ou des rails auxquels le réflecteur est suspendu ou en utilisant des moyens de sustentation tels que des systèmes à coussins d'air ou des patins glisseurs. Cependant ces systèmes de compensation sont inadaptés dans le cas du réglage d'un instrument de haute précision, nécessitant des réglages optiques de l'ordre du micromètre ou du microradian, de grande envergure, par exemple supérieure à 3 mètres, et de masse importante, par exemple supérieure à une tonne. En effet, ces systèmes de compensation ne permettent pas d'atteindre une bonne stabilité de l'instrument lors des phases de réglage, ni une haute précision car les efforts de compensation à appliquer sont déterminés à partir de prédictions et non pas sur des mesures physiques de la position, appelée position zéro gravité ou position 0g, de l'instrument correspondant à la position en apesanteur. En particulier, ces systèmes de compensation ne permettent pas d'obtenir une précision des intensités d'efforts de l'ordre de plus ou moins un Newton ni une précision des directions d'efforts inférieure à un degré. En outre, les efforts de compensation de gravité sont généralement appliqués en un seul point d'interface ce qui est nettement insuffisant pour des instruments de haute précision et de masse importante.

Le but de l'invention est de remédier aux inconvénients des systèmes de compensation de la gravité connus et d'élaborer un nouveau procédé de compensation de la gravité d'un instrument spatial qui n'est pas basé sur des prédictions des efforts à appliquer à l'instrument mais qui est basé sur des mesures de déplacements physiques des pièces structurales de l'instrument, et qui permet de déterminer, avec une précision d'intensité de plus ou moins un Newton et une précision de direction de plus ou moins deux dixièmes de degré, les efforts à appliquer en différents points d'interface de l'instrument afin d'annuler, aux différents points d'interface, les déformations structurales de l'instrument induites par la gravité et de régler l'instrument le plus précisément possible dans des conditions de fonctionnement correspondant à un état de fonctionnement en apesanteur.

Pour cela, l'invention concerne un procédé de compensation de la gravité sur un instrument au sol, le procédé étant conforme à la revendication 1.

Avantageusement, la position 0g de l'instrument dans le repère XYZ est une position moyenne située à égale distance entre les deux mesures de position réalisées pour chaque cible de visée, avant et après le retournement de l'instrument par rotation de 0° à 180° autour de l'axe prédéterminé.

Préférentiellement, les cibles de visée sont des papiers réfléchissants collés sur l'instrument.

Avantageusement, le procédé peut comporter une étape additionnelle consistant à vérifier par des mesures par photogrammétrie que la position de l'instrument obtenue après application des efforts de compensation est la position 0g.

Avantageusement, l'instrument peut être un télescope.

D'autres particularités et avantages de l'invention apparaîtront clairement dans la suite de la description donnée à titre d'exemple purement illustratif et non limitatif, en référence aux dessins schématiques annexés qui représentent :
- figure 1 : un schéma, en coupe longitudinale dans un plan YZ, d'un exemple d'instrument sur lequel sont appliqués des efforts de compensation de la gravité, selon l'invention ;
- figure 2 : une vue en coupe transversale dans un plan XY, d'un exemple d'application d'efforts sur un banc optique supportant un miroir primaire de télescope, selon l'invention ;
- figure 3 : une vue en coupe transversale dans un plan XY, d'un exemple d'application d'efforts sur un cadre de support d'un miroir secondaire de télescope, selon l'invention ;
- figure 4: un exemple de dispositif de mesure par photogrammétrie, selon l'invention ;
- figure 5 : un exemple de reconstitution par photogrammétrie de la répartition d'un ensemble de cibles de visée sur un instrument, selon l'invention ;
- figure 6a: deux courbes illustrant un exemple de mesures de position réalisées par photogrammétrie avant et après un retournement de 0° à 180° par rapport à un axe Z de l'instrument, selon l'invention ;
- figure 6b : une courbe illustrant la position 0g correspondant à la moyenne des mesures 0° et 180° de la figure 6a, selon l'invention ;
- figure 7 : un synoptique illustrant les différentes étapes d'un procédé ne faisant pas partie de l'invention,
- figure 8 : un synoptique illustrant les différentes étapes du procédé, selon l'invention.

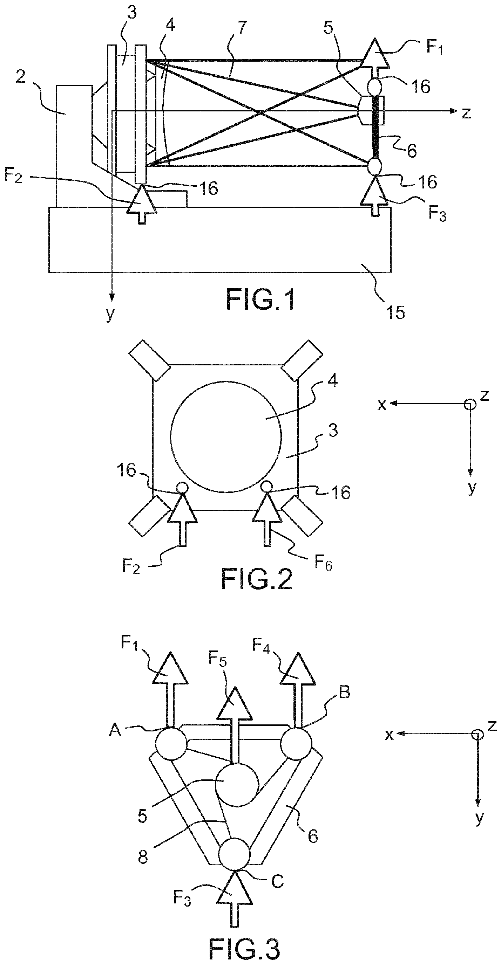

La figure 1 représente un schéma d'un exemple d'instrument sur lequel sont appliqués des efforts de compensation de la gravité. L'instrument est fixé sur un outillage 2, tel que par exemple un bâti ou un chariot permettant de retourner l'instrument, l'outillage 2 étant découplé de l'instrument et posé sur le sol 15. Sur cet exemple, l'instrument est un télescope comportant principalement un banc optique 3 fixé sur l'outillage 2, un miroir primaire 4 monté sur le banc optique au fond d'une cavité et un miroir secondaire 5 monté au centre d'un cadre support 6 disposé à l'entrée de la cavité. Le cadre support 6 peut par exemple être relié au banc optique 3 par une pièce structurale appelée treillis de support 7. L'instrument est destiné à être monté sur un satellite placé en orbite terrestre et est donc destiné à fonctionner dans un environnement spatial en absence de gravité. Le réglage de l'instrument est réalisé sur Terre en présence de la gravité terrestre, dans une phase préalable à son lancement. En présence de la gravité, les différentes pièces structurales de l'instrument sont soumises à une force dont l'orientation est dirigée vers le sol selon l'axe vertical Y et dont l'intensité est égale à leur poids et se déforment sous l'action de leur propre poids. Comme l'instrument est destiné à fonctionner en absence de gravité, il est nécessaire de compenser les déformations structurales de l'instrument dues à la gravité, lors de son réglage au sol, de façon à ce que l'instrument se trouve, dans une position correspondant à celle qu'il aura lors de son fonctionnement en orbite. Selon l'invention, la compensation des déformations structurales peut être réalisée en utilisant des contrepoids reliés à des câbles passant par des poulies qui appliquent des efforts de traction et/ou en utilisant des vérins mécaniques axiaux qui appliquent des efforts de pression. Les efforts de traction et/ou de pression peuvent être appliqués en différents points d'interface 16 de l'instrument, un point d'interface étant défini comme étant un point de l'instrument sur lequel est appliqué un effort, les différents efforts étant d'intensité différentes en chaque point d'interface et étant orientés selon une direction verticale et dans un sens opposé à la force de gravité. Pour appliquer un effort de compensation sur une pièce fragile telle qu'un miroir par exemple, cette pièce fragile est disposée dans une pièce structurale, par exemple un support structural tel qu'un dispositif de fixation du miroir ou une cage structurale, sur laquelle les efforts sont appliqués.

A titre d'exemple non limitatif, les figures 1, 2 et 3 illustrent un télescope monté en position horizontale sur un outillage 2. Des efforts de pression F2, F3 et des efforts de traction F1, F4, F5 sont appliqués en différents points d'interface 16 situés sur des pièces structurales de l'instrument, l'emplacement des points d'interface pouvant être situé en n'importe quel point de la surface de chaque pièce structurale de l'instrument. Par exemple, comme représenté sur les figures 1, 2 et 3, des efforts de pression peuvent être appliqués en un ou plusieurs points d'interface situés sur le banc optique 3 et sur une partie inférieure du cadre support 6 du miroir secondaire 5. De même, des efforts de traction peuvent être appliqués sur une cage structurale du miroir secondaire 5 et sur une partie supérieure du cadre support du miroir secondaire. Ainsi, comme représenté sur l'exemple de la figure 3, dans le cas où la cage du miroir secondaire 5 est reliée à un cadre support triangulaire 6 par des lames flexibles 8, la gravité peut par exemple être compensée en quatre points d'interface différents par trois contrepoids, visualisés par les efforts F1, F4, F5, pouvant être respectivement appliqués sur trois points d'interface situés sur les sommets A, B du cadre support et sur la cage du miroir secondaire et par un vérin mécanique axial, représenté par l'effort F3, pouvant être appliqué sur un point d'interface situé sur le troisième sommet C. De même, comme le montrent les efforts F2 et F6 représentés sur la figure 2, il est possible de compenser la gravité au niveau du miroir primaire 4 en plaçant deux vérins mécaniques axiaux sur des points d'interface 16 situés sur le banc optique 3 qui supporte le miroir primaire. Il est bien entendu possible d'augmenter ou de diminuer le nombre de points d'interface et de modifier leur emplacement sur les pièces structurales. Par exemple, il est possible d'ajouter six points d'interface sur les six barres du treillis de support 7, par exemple au centre de chaque barre entre le miroir primaire 4 et le miroir secondaire 5. Il est également possible d'ajouter des points d'interface sur les dispositifs de fixation du miroir primaire 4. Par ailleurs, le télescope comporte également des pièces structurales additionnelles, non représentées, telles que notamment des détecteurs et des miroirs additionnels placés dans une cavité arrière située derrière le miroir primaire, et chacune de ces pièces structurales peut comporter un ou plusieurs points d'interface additionnels. En outre, il est également possible de compenser la gravité de tout autre type d'instrument qu'un télescope et de disposer l'instrument dans une position différente de la position horizontale.

Les différents points d'interface 16 sont sélectionnés en fonction de la précision de réglage souhaitée au niveau des différentes pièces structurales de l'instrument, et en particulier, dans le cas d'un instrument optique, au niveau des dispositifs optiques tels que les miroirs, les lentilles optiques et les bancs optiques, de manière à assurer un alignement précis des dispositifs optiques. Cependant, lorsqu'il y a plus de trois points d'interface, les différents points d'interface ne sont pas indépendants entre eux et l'application d'un effort en un point d'interface particulier a une répercussion sur d'autres points de l'instrument et notamment sur les autres points d'interface. Il n'est donc pas possible de déterminer les intensités des efforts à appliquer en chaque point d'interface indépendamment des autres points d'interface. Le procédé selon l'invention permet de déterminer globalement les efforts à appliquer aux différents points d'interface sélectionnés pour compenser la gravité de l'instrument.

Selon l'invention, le procédé consiste, dans des étapes 8 et 9, à déterminer, dans un repère de référence XYZ lié à l'instrument, la position qu'aurait l'instrument s'il était en orbite, en l'absence de gravité. La position de l'instrument en absence de gravité est appelée la position 0g de l'instrument, où g est l'accélération de la pesanteur et égale à 9,81N/kg à la surface de la Terre.

Pour déterminer la position 0g de l'instrument, l'invention consiste à sélectionner N points d'interface 16 de l'instrument où des efforts F1, F2,...FN seront appliqués pour compenser la gravité, puis à répartir plusieurs cibles de visée 14 sur toute la surface de l'instrument, et en particulier en chaque point d'interface 16 sélectionné et autour de chaque point d'interface. Les cibles de visée 14 peuvent par exemple être collées sur la surface de l'instrument. A titre d'exemple non limitatif, les cibles de visée peuvent être constituées par des dispositifs réfléchissant les ondes lumineuses tels que des morceaux de papiers réfléchissants auto-collants qui présentent l'avantage d'avoir une masse négligeable par rapport à la masse de l'instrument, ou tout autre dispositif réfléchissant les ondes lumineuses.

L'invention consiste ensuite dans l'étape 8, à réaliser des mesures des positions des différentes cibles de visée 14 dans un repère de référence XYZ lié à l'instrument, les mesures de position étant réalisées sans contact, par photogrammétrie.

Les dispositifs de photogrammétrie sont par exemple utilisés dans les domaines de la topographie, de la cartographie, de l'architecture, de la géologie ou dans le domaine de l'archéologie. Ils comportent classiquement un appareil photographique numérique de haute précision et un logiciel de traitement d'images. Le logiciel de traitement d'images permet de reconstruire une cartographie en trois dimensions d'une scène à partir de deux prises de vue visant la même scène.

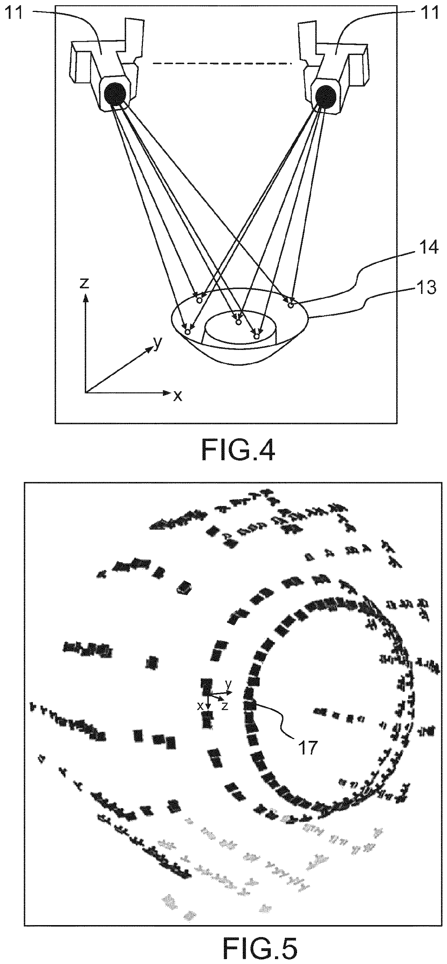

La figure 4 illustre un exemple de dispositif de mesures par photogrammétrie selon l'invention, comportant un appareil photographique 11 réalisant une pluralité de prises de vues d'un même instrument 13 équipé de cibles de visée 14, tel que par exemple un réflecteur d'antenne comportant cinq cibles de visée 14. Les prises de vue de l'instrument équipé des cibles de visée, sont réalisées dans toutes les directions de l'espace et sous un grand nombre d'angles de vue différents, en s'assurant que chaque cible de visée apparaisse dans plusieurs prises de vue différentes. Les images obtenues par les différentes prises de vues sont ensuite traitées par un logiciel de traitement d'images qui permet de construire une cartographie de l'instrument en trois dimensions, et d'en déduire une mesure de la position et de l'orientation de chaque cible de visée dans un repère de référence XYZ lié à l'instrument, comme représenté sur l'exemple de cartographie d'un instrument de la figure 5 où chaque tâche 17 correspond à une cible de visée 14. La précision des mesures de position de chaque point de l'instrument dans le repère XYZ lié à l'instrument dépend directement du nombre de cibles de visée 14 placées sur l'instrument autour du point d'interface 16 considéré et du nombre de prises de vues réalisé. Pour augmenter la précision des mesures, il faut donc placer un grand nombre, par exemple une centaine, de cibles de visée 14 autour de chaque point d'interface 16 où les efforts de compensation F1, F2,...FN vont être appliqués. Cependant, cela augmente beaucoup le temps de réalisation des mesures.

Selon l'invention, la cartographie par photogrammétrie de l'instrument équipé des cibles de visée 14 est réalisée pour deux positions différentes de l'instrument, la première position étant une position initiale quelconque correspondant à une position 0°, la deuxième positon étant obtenue, à partir de la position initiale, par un retournement de l'instrument par rotation d'un angle de 180° autour d'un axe Z prédéterminé de l'instrument. La force de gravité étant orientée vers le sol selon un axe vertical, l'axe Z doit être différent de l'axe vertical.

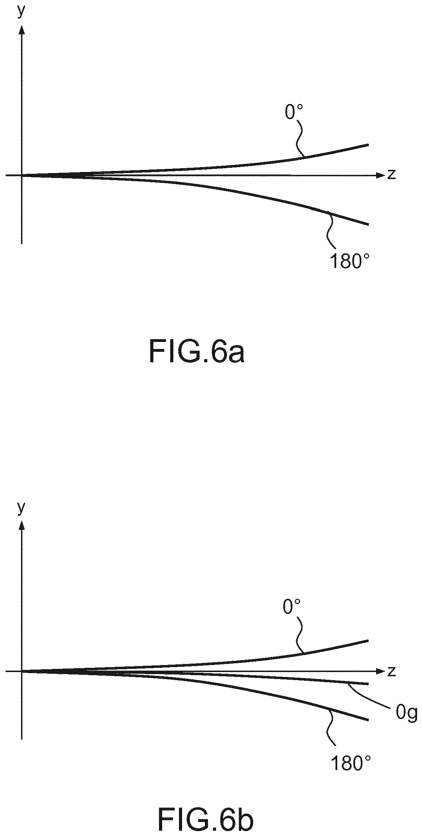

Par exemple, dans le cas où l'instrument est un télescope, l'axe Z peut être l'axe qui joint les centres des miroirs primaire et secondaire. Les deux cartographies réalisées avant et après un retournement de l'instrument par rotation de 0° à 180° autour de l'axe Z permettent d'obtenir deux mesures de position pour chaque cible de visée sur l'instrument. Lorsque l'instrument se trouve dans la position initiale 0°, tous les points structuraux de l'instrument sont soumis à la force de gravité. Après un retournement de l'instrument de 180° autour d'un axe de rotation Z prédéfini, tous les points de l'instrument se trouvent, par rapport à l'axe de rotation, dans une position diamétralement opposée à la position dans laquelle ils se trouvaient avant le retournement et sont donc soumis à une force de gravité de même intensité mais de sens opposé à celle qu'ils avaient à la position initiale 0°. La position 0g de chaque cible de visée de l'instrument correspondant à l'absence de gravité est donc située entre les deux positions mesurées et à égale distance de ces deux positions et correspond donc à une valeur moyenne entre les deux mesures de position. L'invention consiste alors pour chaque cible de visée, à déterminer la valeur moyenne des deux mesures de position réalisées à 0° et à 180° et d'en déduireà position de l'instrument en absence de gravité en chaque point d'interface sélectionné. La figure 6a montre un exemple de deux courbes illustrant la répartition des positions des cibles de visée situées dans un plan YZ d'un instrument, les deux courbes étant obtenues par photogrammétrie à 0° et à 180°. Pour un instrument constitué d'un télescope fixé sur un plan horizontal, l'axe Z de retournement de l'instrument peut par exemple être choisi suivant un axe horizontal passant par les centres des miroirs primaire et secondaire, comme représenté sur les figures 6a et 6b, mais ce n'est pas indispensable, toute autre orientation différente de l'axe vertical peut aussi être choisie. La figure 6b montre un exemple de courbe illustrant la répartition des positions moyennes obtenues à partir des positions à 0° et à 180° de la figure 6a. Cette courbe correspondant à la répartition des positions moyennes est la position 0g de l'instrument à atteindre par application d'efforts aux différents points d'interfaces sélectionnés qui sont localisés dans le plan YZ correspondant.

Le procédé de l'invention consiste ensuite à déterminer l'intensité des efforts de compensation à appliquer en chaque point d'interface sélectionné pour atteindre la position 0g. L'intensité des efforts à appliquer en chaque point d'interface 16 sélectionné dépend de l'écart de position du point d'interface sur l'instrument par rapport à la position 0g à atteindre. Par ailleurs, tout effort appliqué en un point d'interface provoque une modification de position des autres points d'interface.

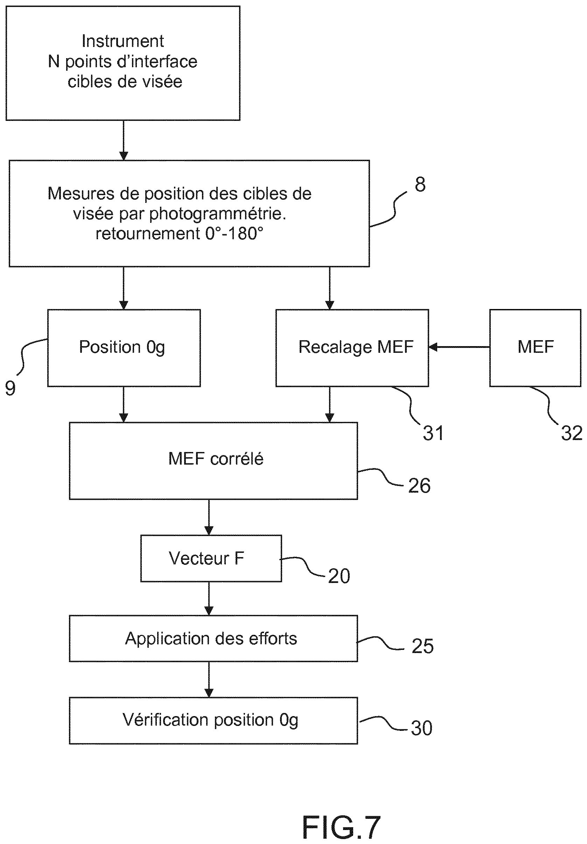

Selon un exemple ne faisant pas partie de l'invention représenté sur la figure 7, la détermination des efforts peut être réalisée par simulation à partir d'un modèle éléments finis MEF corrélé 26 de l'instrument. Le modèle éléments finis corrélé 26 est obtenu après une étape de corrélation 31, c'est-à-dire de recalage, d'un modèle éléments finis 32 de l'instrument avec les mesures de position réalisées à l'étape 8 lors des retournements 0°-180°. Cette méthode par simulation permet d'approcher de la position 0g mais avec une précision qui n'est généralement pas suffisante pour un instrument de haute précision de l'ordre du micromètre.

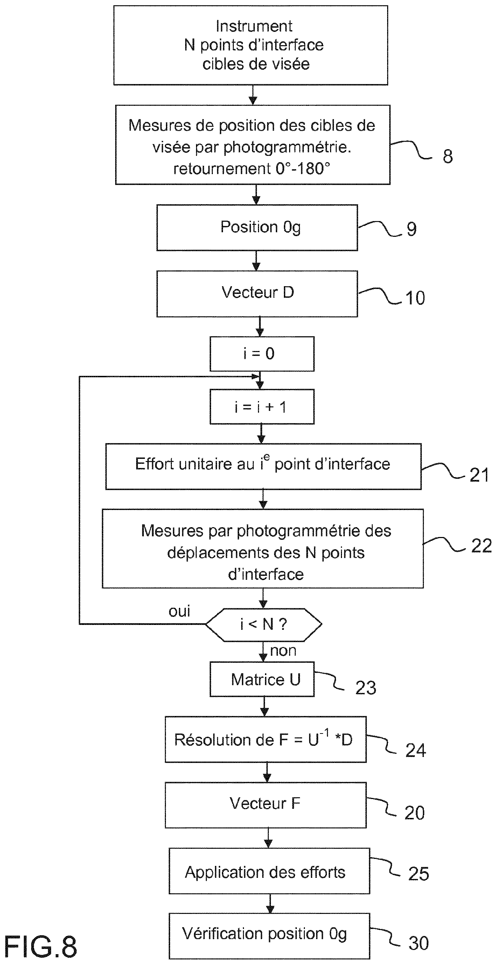

Selon l'invention représenté sur la figure 8, pour déterminer l'intensité des efforts qui doit être appliqué à l'instrument en chaque point d'interface sélectionné, l'invention consiste, pour chaque cible de visée, à comparer la position initiale 0° mesurée et la position 0g à atteindre de façon à déterminer les écarts entre les deux positions et en déduire les déplacements D1, D2,..., DN correspondants à réaliser localement en chaque point d'interface 16 de l'instrument. Les déplacements D1, D2,..., DN à réaliser localement en chaque point d'interface 16 peuvent par exemple être égaux à une valeur moyenne des écarts de position mesurés pour différentes cibles disposées à proximité et autour du même point d'interface 16 considéré. Les N déplacements D1, D2,..., DN à réaliser aux N points d'interface pour atteindre la position 0g sont représentés sous la forme d'un vecteur D de taille N*1.

L'invention consiste ensuite à réaliser des mesures par photogrammétrie des déplacements de l'instrument en chaque point d'interface lorsqu'un effort unitaire est appliqué en un seul point d'interface 16, à effectuer ces mesures N fois en appliquant un effort unitaire successivement en N points d'interface différents puis en déduire un système d'équations reliant un effort appliqué en un seul point d'interface et les déplacements correspondants obtenus à tous les points d'interface de l'instrument. Pour cela, l'invention consiste à appliquer 21 un premier effort unitaire quelconque, par exemple dix Newton, en un premier point d'interface et à mesurer 22, par photogrammétrie, les déplacements locaux de l'instrument correspondant à ce premier effort unitaire, les mesures des déplacements locaux étant réalisées pour tous les points d'interface sélectionnés. Puis à choisir un deuxième point d'interface, à lui appliquer un deuxième effort unitaire, qui peut être identique ou différent du premier effort unitaire, par exemple cent Newton, et à faire de nouvelles mesures, par photogrammétrie, des nouveaux déplacements locaux de l'instrument correspondant à ce deuxième effort unitaire, les mesures étant réalisées à tous les points d'interface sélectionnés. Puis à réitérer N fois les mêmes mesures par photogrammétrie en choisissant successivement tous les points d'interface les uns après les autres et en appliquant un i^{ème} effort unitaire au i^{ème} point d'interface, où i est compris entre 1 et N.

A la fin du processus itératif, l'invention consiste à reporter 23 tous les déplacements locaux obtenus à chaque point d'interface et à chaque itération dans une matrice U, appelée matrice de sensibilité, et à résoudre 24 un système matriciel donnant les efforts de compensation à appliquer aux différents points d'interface sélectionnés en fonction des déplacements locaux à réaliser en ces points d'interface pour atteindre la position 0g. Pour un nombre de N points d'interface, où N est un nombre entier supérieur à un, l'invention consiste alors à résoudre le système matriciel F=U⁻¹D, où F est un vecteur, de taille N*1, des efforts de compensation à appliquer en chaque point d'interface, U est la matrice de sensibilité de taille N*N, et D est un vecteur, de taille N*1, des déplacements à appliquer en chaque point d'interface pour atteindre la position 0g. Ce système matriciel comporte N équations à N inconnues, les N inconnues étant les efforts de compensation à appliquer.

Après résolution des N équations, les N efforts de compensation correspondant aux solutions des N équations peuvent être appliqués 25 aux points d'interface correspondants de l'instrument.

L'invention consiste en outre dans une étape 30, à vérifier par photogrammétrie, que la position de l'instrument obtenue après application des N efforts de compensation aux N points d'interface correspond à la position 0g. Pour cela, il est possible de définir une valeur d'écart maximal à ne pas dépasser par rapport à la position 0g. Dans le cas où la vérification confirme que la position de l'instrument auquel sont appliqués les efforts de compensation, correspond à la position 0g avec une erreur inférieure à la valeur d'écart maximal, la compensation de la gravité est terminée et la phase de réglage de l'instrument peut commencer. Dans le cas contraire où la position obtenue ne correspond pas à la position 0g mais présente un écart supérieur à la valeur d'écart maximal par rapport à la position 0g, le procédé de compensation de la gravité a échoué, l'échec pouvant résulter d'un nombre de cibles de visée ou d'un nombre de prises de vue insuffisants. Le procédé de compensation doit alors être repris dans son ensemble depuis la première étape 8 avec un plus grand nombre de cibles de visée placées sur la surface de l'instrument et un plus grand nombre de prises de vue.

## Revendications

1. Procédé de compensation de la gravité sur un instrument au sol, l'instrument étant destiné à fonctionner en orbite, consistant :
- à mesurer (8) des positions de plusieurs cibles de visée (14) réparties sur l'instrument, dans un repère XYZ de référence lié à l'instrument, avant et après un retournement de l'instrument par rotation de 0° à 180° autour d'un axe prédéterminé et, à partir des mesures de position, en déduire (9) une mesure de position 0g de l'instrument dans le repère XYZ de référence, où g est l'accélération de la pesanteur,
- à déterminer (20) des intensités d'efforts de compensation (F1, F2,..., FN) à appliquer à N points d'interface (16) pour atteindre la position 0g,
- puis à appliquer (25) les efforts de compensation de gravité (F1, F2,..., FN) aux N points d'interface (16) de l'instrument,
**caractérisé en ce que** les mesures des positions des cibles de visée sont réalisées par photogrammétrie et **en ce que** la détermination des efforts de compensation (F1, F2,..., FN) à appliquer en chaque point d'interface (16) consiste :
- à partir de la position 0g obtenue, à déterminer (10) des déplacements (D1, D2,..., DN) à réaliser en N points d'interface (16) de l'instrument, où N est un nombre entier supérieur à 1,
- à réaliser (22) des mesures par photogrammétrie des déplacements de l'instrument en tous les points d'interface (16) après application d'un effort unitaire d'intensité quelconque sur uniquement l'un des N points d'interface, les mesures de déplacements étant réalisées N fois en appliquant successivement un effort unitaire sur chacun des N points d'interface considérés individuellement et successivement les uns après les autres,
- à reporter (23) tous les déplacements mesurés par photogrammétrie dans une matrice U de dimensions N*N, et
- à résoudre (24) un système matriciel F= U⁻¹*D où F est un vecteur N*1 comportant N inconnues relatives aux efforts (F1, F2,...,FN) à appliquer aux N points d'interface pour atteindre la position 0g, D est un vecteur N*1 comportant N valeurs (D1, D2,...,DN) relatives aux déplacements à réaliser aux N points d'interface pour atteindre la position 0g et où U⁻¹ est l'inverse de la matrice U.

2. Procédé de compensation selon la revendication 1, **caractérisé en ce que** la position 0g de l'instrument dans le repère XYZ est une position moyenne située à égale distance entre les deux mesures de position réalisées pour chaque cible de visée, avant et après le retournement de l'instrument par rotation de 0° à 180° autour de l'axe prédéterminé.

3. Procédé selon l'une des revendications 1 ou 2, **caractérisé en ce que** les cibles de visée (14) sont des papiers réfléchissants collés sur l'instrument.

4. Procédé de compensation selon l'une des revendications précédentes, **caractérisé en ce qu'**il consiste en outre, à vérifier par des mesures par photogrammétrie que la position de l'instrument obtenue après application (25) des efforts de compensation est la position 0g.

5. Procédé de compensation selon l'une des revendications précédentes, **caractérisé en ce que** l'instrument est un télescope.

## Patentansprüche

1. Verfahren zur Kompensation der auf ein am Boden befindliches Instrument einwirkenden Schwerkraft, wobei das Instrument dazu bestimmt ist, in der Umlaufbahn zu arbeiten, Folgendes beinhaltend:
- Messen (8) der Positionen mehrerer Peilziele (14), welche auf dem Instrument verteilt sind, in einem mit dem Instrument verbundenen Koordinatensystem XYZ, vor und nach einem Kippen des Instrumentes durch Rotation von 0° auf 180° um eine vorbestimmte Achse, und anhand der Positionsmessungen, hiervon Ableiten (9) einer Messung einer Position 0g des Instrumentes im Bezugs-Koordinatensystem XYZ; wobei g die Beschleunigung der Schwerkraft ist,
- Bestimmen (20) der Kompensations-Kraftintensitäten (F1, F2,..., FN), welche auf N Schnittstellenpunkte (16) aufzubringen sind, um die Position 0g zu erreichen,
- gefolgt von Aufbringen (25) der Schwerkraft-Kompensationskräfte (F1, F2,..., FN) auf die N Schnittstellenpunkte (16) des Instrumentes,
**dadurch gekennzeichnet, dass** die Messungen der Peilzielpositionen anhand von Photogrammetrie erfolgen und die Bestimmung der Kompensationskräfte (F1, F2,..., FN), die auf jeden Schnittstellenpunkt (16) aufzubringen sind, in folgenden Schritten besteht:
- Bestimmen (10), anhand der erzielten Position 0g, von zu bewerkstelligenden Bewegungen (D1, D2,..., DN) an N Schnittstellenpunkten (16) des Instrumentes, wobei N eine Ganzzahl größer als 1 ist,
- Durchführen (22) von Photogrammetrie-Messungen der Bewegungen des Instrumentes an allen Schnittstellenpunkten (16) nach Aufbringen einer Einzelkraft beliebiger Intensität auf nur einen der N Schnittstellenpunkte, wobei die Bewegungsmessungen N Mal durchgeführt werden, indem nacheinander eine Einzelkraft auf jeden der N Schnittstellenpunkte einzeln und nacheinander betrachtet aufgebracht wird,
- Übertragen (23) aller anhand von Photogrammetrie gemessenen Bewegungen in eine Matrix U mit Abmessungen N*N, und
- Auflösen (24) eines Matrixsystems F = U⁻¹*D, wobei F ein Vektor N*1 ist, welcher N Unbekannte in Bezug auf die Kräfte (F1, F2,...,FN) beinhaltet, welche auf die N Schnittstellenpunkte aufzubringen sind, um die Position 0g zu erreichen, D ein Vektor N*1 ist, welcher N Werte (D1, D2,...,DN) in Bezug auf die an den N Schnittstellenpunkten zu bewerkstelligenden Bewegungen beinhaltet, um die Position 0g zu erreichen, und wobei U⁻¹ die Inverse der Matrix U ist.

2. Kompensationsverfahren nach Anspruch 1, **dadurch gekennzeichnet, dass** die Position 0g des Instrumentes im Koordinatensystem XYZ eine mittlere Position ist, welche sich in gleichem Abstand zwischen den beiden Positionsmessungen befindet, welche für jedes Peilziel vor und nach dem Kippen des Instrumentes durch Rotation von 0° auf 180° um die vorbestimmte Achse bewerkstelligt werden.

3. Verfahren nach einem der Ansprüche 1 oder 2, **dadurch gekennzeichnet, dass** die Peilziele (14) reflektierende Papiere sind, welche auf das Instrument geklebt sind.

4. Kompensationsverfahren nach einem der vorhergehenden Ansprüche, **dadurch gekennzeichnet, dass** es zudem darin besteht, anhand von Photogrammetrie-Messungen zu überprüfen, dass die nach Aufbringen (25) der Kompensationskräfte erzielte Position des Instrumentes die Position 0g ist.

5. Kompensationsverfahren nach einem der vorhergehenden Ansprüche, **dadurch gekennzeichnet, dass** das Instrument ein Teleskop ist.

## Claims

1. A method for compensating for the effect of gravity on a ground-based instrument, which instrument is intended to operate in orbit, comprising:
- measuring (8) positions of a plurality of intended targets (14) distributed on the instrument, in an XYZ reference coordinate system linked to the instrument, before and after turning the instrument by rotating from 0° to 180° about a predetermined axis and, on the basis of the position measurements, deducing (9) therefrom a measurement of a position 0g of the instrument in the XYZ reference coordinate system, where g is the acceleration of the gravity;
- determining (20) intensities of compensation forces (F1, F2,..., FN) to be applied to N interface points (16) for reaching the position 0g;
- then applying (25) the gravity compensation forces (F1, F2,..., FN) to the N interface points (16) of the instrument,
**characterised in that** the measurements of the positions of the intended targets are performed by photogrammetry and **in that** determining the compensation forces (F1, F2,..., FN) to be applied at each interface point (16) comprises:
- from the obtained position 0g, determining (10) movements (D1, D2,..., DN) to be performed at N interface points (16) of the instrument, where N is a whole number greater than 1;
- performing (22) photogrammetry measurements of the movements of the instrument at all the interface points (16) after applying a single force of any intensity to only one of the N interface points, the measurements of movements being performed N times by successively applying a single force on each of the N interface points considered individually and successively one after the other;
- adding (23) all the movements measured by photogrammetry to a matrix U of dimensions N*N; and
- solving (24) a matrix system F = U⁻¹*D, where F is a vector N*1 comprising N unknowns relative to the forces (F1, F2,..., FN) to be applied to the N interface points for reaching the position 0g, D is a vector N*1 comprising N values (D1, D2,..., DN) relative to the movements to be performed at the N interface points for reaching the position 0g and where U⁻¹ is the inverse of the matrix U.

2. The compensation method as claimed in claim 1, **characterised in that** the position 0g of the instrument in the XYZ coordinate system is an average position located at an equal distance between the two position measurements performed for each intended target, before and after turning the instrument by rotating from 0° to 180° about the predetermined axis.

3. The method as claimed in any one of claims 1 or 2, **characterised in that** the intended targets (14) are reflective papers adhered on the instrument.

4. The compensation method as claimed in any one of the preceding claims, **characterised in that** it further comprises verifying, through photogrammetry measurements, that the position of the instrument obtained after applying (25) compensation forces is the position 0g.

5. The compensation method as claimed in any one of the preceding claims, **characterised in that** the instrument is a telescope.
